# EUROPÄISCHE PATENTSCHRIFT

(11) **EP 3 609 650 B1**
(45) Veröffentlichungstag und Bekanntmachung des Hinweises auf die Patenterteilung: **03.03.2021**
(21) Anmeldenummer: 18717335.6
(22) Anmeldetag: 10.04.2018
(51) Int. Cl.: B23P 9/00, C23C 4/02, B23P 17/00, B24C 3/32

(54) **VORRICHTUNG UND VERFAHREN ZUM AUFRAUEN VON ZYLINDERLAUFFLÄCHEN**
DEVICE AND METHOD FOR ROUGHENING CYLINDER RUNNING SURFACES
DISPOSITIF ET PROCÉDÉ POUR LA RUGOSIFICATION DES SURFACES DE CONTACT DE CYLINDRES

(30) Priorität: 11.04.2017 DE 202017102179 U
(43) Veröffentlichungstag der Anmeldung: 19.02.2020
(73) Patentinhaber: Piller Entgrattechnik GmbH, 71254 Ditzingen (DE)
(72) Erfinder: PILLER, Thomas, 71254 Ditzingen (DE)
(74) Vertreter: Fleck, Hermann-Josef
(86) Internationale Anmeldenummer: PCT/EP2018/059160
(87) Internationale Veröffentlichungsnummer: WO 2018/189179

(56) Entgegenhaltungen:
- EP-A1- 2 845 683
- DE-A1-102011 080 852
- DE-C1- 3 427 770
- JP-A- 2006 095 623
- JP-A- 2009 078 305
- RU-C1- 2 150 369
- RU-C1- 2 433 873
- RU-C2- 2 160 660
- US-A- 5 897 062
- US-B2- 9 050 642

## Beschreibung

Die Erfindung bezieht sich auf eine Vorrichtung zum Aufrauen von Zylinderbohrungen umgebenden Zylinderlaufflächen unter Einwirkung von Flüssigkeit mit einer eine rotierende Einheit aufweisenden Bearbeitungseinheit und auf ein Verfahren zum Aufrauen von Zylinderlaufflächen.

Eine Vorrichtung dieser Art ist in der EP 2 845 683 als bekannt ausgewiesen. Bei dieser bekannten Vorrichtung wird die eine Zylinderbohrung umgebende Zylinderlauffläche mittels Hochdruck-Flüssigkeitsstrahlen aufgeraut, die über eine in die Zylinderbohrung eingeführte, sich drehende Hohlwelle mit daran angeschlossenen Austrittsdüsen auf die Zylinderlauffläche gerichtet werden. Aus der Zylinderwandung beim Aufrauen herausgelöste Metallteilchen, deren Partikelgrößen im µm-Bereich liegen, verunreinigen dabei das Abwasser, sodass es schwierig ist, dieses Abwasser zu reinigen und wieder zuzuführen. Wird Frischwasser zugeführt, ergibt sich ein relativ hoher Wasserverbrauch.

In der JP 2009 078305 A ist ein Verfahren und eine Vorrichtung zum Bearbeiten der Innenfläche eines Zylinders angegeben, wobei in einem Ölbad ein von der Innenfläche des Zylinders beabstandeter Block in Vibration versetzt und in dem Spalt zwischen der Außenfläche des Blocks und der Innenfläche des Zylinders eine Kavitationswirkung erzeugt wird.

Weitere Vorrichtungen zur Oberflächenbehandlung verschiedener Art sind in der DE 10 2010 001 287 A1, der DE 600 30 341 T2, der USA 6 993 948 B2, der US 9 050 642 B2, der US 5 897 062 A, der EP 0 568 315 B1 und der WO 2007/124 396 A2 offenbart.

Auch bei einem in der DE 3 427 770 C1 gezeigten Verfahren und einer entsprechenden Vorrichtung werden Zylinderlaufflächen mittels Flüssigkeitsstrahlen unter hohem Druck beaufschlagt, um Oberflächenmaterial abzutragen. Auch dabei sind vorstehende Nachteile nicht ausgeschlossen. Entsprechendes gilt auch für eine in der EP 0 568 315 B1 angegebene Vorrichtung und ein damit durchgeführtes Verfahren.

In der EP 0 727 282 A1 ist vorgeschlagen, Bohrungs- und Rohrwandungen mittels Sandstrahlen zu behandeln. Bei einem solchen Verfahren sind andere Vorkehrungen für die Bearbeitung erforderlich und relativ hoher Verschleiß und Verschmutzung nachteilig.

Der vorliegenden Erfindung liegt die Aufgabe zugrunde, eine Vorrichtung und ein Verfahren zum Aufrauen von Zylinderlaufflächen bereitzustellen, die bzw. das einen möglichst ökonomischen Betrieb ermöglicht.

Die Aufgabe wird mit den Merkmalen der Ansprüche 1 und 12 gelöst. Bei der Vorrichtung nach Anspruch 1 ist vorgesehen, dass ein Aufnahmebehälter für die Flüssigkeit zum Bilden eines Flüssigkeitsbads vorhanden ist, in dem während der Bearbeitung ein die Zylinderbohrungen aufweisendes Gehäuse positioniert ist, und dass die rotierende Einheit an eine Antriebseinheit gekoppelt und mit einem Kavitationsrotor versehen ist, welcher beim Betrieb im Flüssigkeitsbad in die Nähe einer Zylinderlauffläche gebracht ist und mit einer durch die Rotation an der Zylinderlauffläche eine Kavitationswirkung verursachenden Außenkontur versehen ist.

Bei dem Verfahren i nach Anspruch 12 ist vorgesehen, dass die Zylinderlauffläche in einem Wasserbad angeordnet und die Aufrauung in dem Wasserbad durch Abtragung mittels Kavitationswirkung erzeugt wird und dass die Kavitationswirkung mittels eines relativ zu der Zylinderlauffläche rotierenden Kavitationsrotors erzeugt wird.

Bei diesem Aufbau bzw. Verfahren wird das Aufrauen der Zylinderlauffläche im Flüssigkeitsbad, beispielsweise Wasserbad, beziehungsweise im Flüssigkeitsvolumen, unter Nutzung der Kavitationswirkung durchgeführt, wobei abgetragene Partikel der Zylinderlauffläche praktisch nicht störend wirken und abgesetzte Partikel zu passender Zeit beseitigt werden können. Der Bearbeitungsprozess kann durch Einstellen geometrischer und/oder physikalischer Parameter relativ einfach an unterschiedliche Anforderungen, wie z. B. Durchmesser der Zylinderbohrung oder Material der Zylinderlauffläche, angepasst werden. Einstellbare geometrische und physikalische Parameter können z. B. Formung der Außenkontur des Kavitationsrotors, die verwendete Flüssigkeit, die Rotationsgeschwindigkeit und/oder die Behandlungsdauer sein.

Eine vorteilhafte Ausgestaltung der Vorrichtung besteht darin, dass die Außenkontur des Kavitationsrotors mindestens einen in axialer Draufsicht in Umlaufrichtung gekrümmten Abschnitt aufweist. Hierbei ist der gekrümmte Abschnitt beispielsweise in Umfangsrichtung so gewählt, dass sich in Umlaufrichtung in einer zur Rotationsachse senkrechten Ebene ein sich stetig ändernder Abstand von der umgebenden Zylinderlauffläche ergibt, um die Kavitationswirkung durch entsprechende Druckschwankungen zur Erzeugung der Dampfblasen und deren implosionsartiges Zusammenfallen zu erzielen.

Eine für die Wirkungsweise vorteilhafte Ausgestaltung besteht auch darin, dass die Außenkontur des Kavitationsrotors wendellinienförmig verläuft. Durch die wendellinienförmige Ausgestaltung der Außenkontur entsteht in einer Ebene senkrecht zur Rotationsachse ebenfalls eine Linie mit in Umfangsrichtung variierendem Abstand zur Zylinderlauffläche.

Eine für die Funktionsweise und den Aufbau weitere vorteilhafte Ausgestaltung besteht darin, dass der Kavitationsrotor schaufelradartig mit mindestens einem Flügelelement ausgebildet ist.

Ist vorgesehen, dass der Kavitationsrotor walzenförmig ausgebildet ist, so kann der Kavitationsrotor sich axial (in Richtung der Rotationsachse) über einen mehr oder weniger großen Abschnitt der Zylinderbohrung bzw. Zylinderlauffläche erstrecken, womit der axiale Verstellweg bzw. die Bearbeitungszeit entsprechend verkürzt werden kann.

Für den Aufbau und den Betrieb sind des Weiteren die Maßnahmen von Vorteil, dass die Antriebseinheit (6) über eine in axialer Richtung (V) verstellbare Koppelmechanik mit dem Kavitationsrotor verbunden ist oder dass der Aufnahmebehälter zusammen mit dem Gehäuse in axialer Richtung (V) verstellbar ist.

Weitere Anpassungsmöglichkeiten an gegebene Anforderungen ergeben sich dadurch, dass die Antriebseinheit mit einer Drehzahlsteuerung oder Drehzahlregelung versehen ist.

Für die Bearbeitung mehrerer beabstandeter Zylinderbohrungen bzw. Zylinderlaufflächen ist vorteilhaft, dass die Bearbeitungseinheit und/oder der Aufnahmebehälter mit dem die Zylinderbohrungen aufweisenden Gehäuse in zumindest einer zur axialen Richtung (V) orthogonalen Ebenenrichtung (H) verstellbar ist/sind.

Weitere Anpassungsmöglichkeiten für die Bearbeitung ergeben sich dadurch, dass der Außendurchmesser des Kavitationsrotors verstellbar ist.

Die Bearbeitung von Zylinderlaufflächen wird des Weiteren dadurch begünstigt, dass in dem Aufnahmebehälter eine Plattform zum Halten des die Zylinderbohrungen aufweisenden Gehäuses angeordnet ist.

Ist vorgesehen, dass der Kavitationsrotor zwei axial versetzte Rotorköpfe aufweist, die relativ zueinander in entgegengesetzten Richtungen antreibbar sind, so kann durch die hohe Relativgeschwindigkeit zwischen den Rotorköpfen eine besonders effiziente Kavitationswirkung erreicht werden. Die Rotorköpfe können entsprechend dem vorstehend beschriebenen Kavitationsrotor ausgebildet beziehungsweise geformt sein.

Eine vorteilhafte Ausgestaltung des Verfahrens ist im Anspruch 13 angegeben.

Die Erfindung wird nachfolgend anhand von Ausführungsbeispielen unter Bezugnahme auf die Zeichnungen näher erläutert.

Es zeigen:
- Fig. 1: eine schematische Darstellung einer Vorrichtung zum Aufrauen von Zylinderlaufflächen in perspektivischer Ansicht und
- Fig. 2: eine schematisch Darstellung eines in eine Zylinderbohrung eingeführten Kavitationsrotors in axialer Draufsicht.

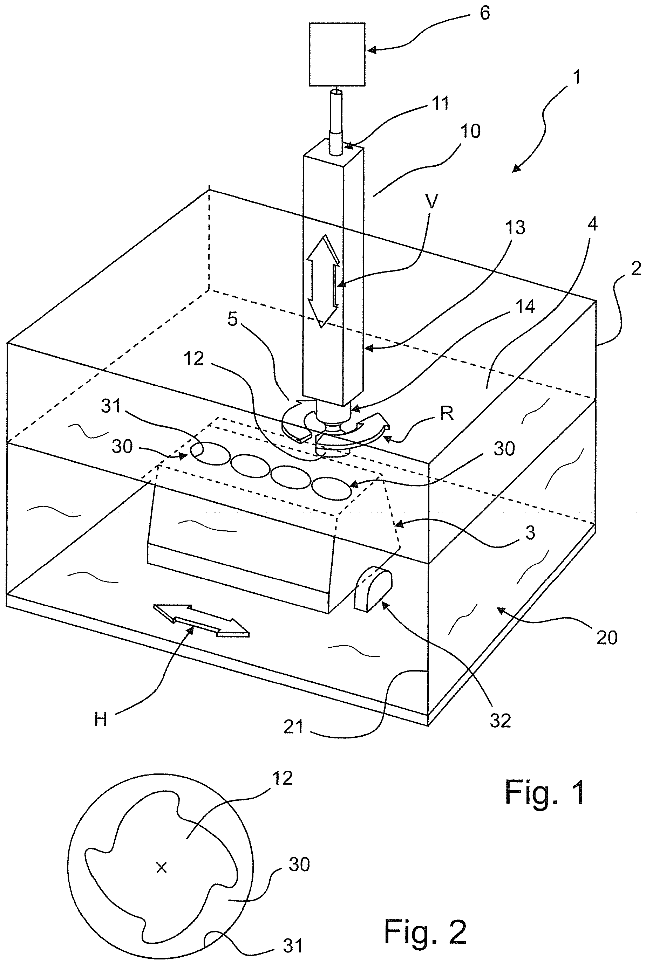

Fig. 1 zeigt eine Vorrichtung zum Aufrauen (Aufrauvorrichtung 1) von Zylinderlaufflächen 31, welche zugehörige Zylinderbohrungen 30 umgeben und in einem Gehäuse 32, insbesondere Kurbelwellengehäuse beziehungsweise Zylinderblock 3, eingebracht sind. Das die Zylinderbohrungen 30 aufweisende Gehäuse 32 ist in einem mit Flüssigkeit, insbesondere Wasser, bis zu einer das Gehäuse 32 übersteigenden Höhe gefüllten Aufnahmebehälter 21 angeordnet, um ein Flüssigkeitsbad 4 zu bilden, in dem die Bearbeitung der Zylinderlaufflächen 31 erfolgt. Der Boden des Aufnahmebehälters 21 bildet eine Plattform 20, auf dem das Gehäuse 32 unmittelbar oder mittels einer Haltevorrichtung gelagert ist. Der Aufnahmebehälter 21 mit der Plattform 20 bildet eine Aufnahmevorrichtung 2 für das Gehäuse 32 beziehungsweise den Zylinderblock 3.

Die Aufrauvorrichtung 1 weist eine über der Aufnahmevorrichtung 2 angeordnete Bearbeitungseinheit 10 auf, welche eine vertikal angeordnete Antriebswelle 11 und einen an deren unterem Endbereich angebrachten Kavitationsrotor 12 sowie ein Halteteil 13 mit einem Stellkörper 14 umfasst. Die Antriebswelle 11 mit dem Kavitationsrotor 12 bildet eine rotierende Einheit 5, welche mittels des Stellkörpers 14 und gegebenenfalls weiterer mechanischer Koppelelemente in axialer Richtung V, das heißt in Richtung der Rotationsachse, auf und ab verstellbar ist. Die rotierende Einheit 5 ist zum rotierenden Antrieb an eine Antriebseinheit 6 gekoppelt, wobei die Rotation beispielsweise auch während der Verstellung in axialer Richtung V möglich ist. Für die Verstellung ist eine entsprechend ausgebildete Koppelmechanik 7 vorhanden. Eine Rotation der rotierenden Einheit 5 und damit auch des Kavitationsrotors 12 erfolgt in Rotationsrichtung R um die Rotationsachse und kann beispielsweise zwischen beiden Rotationsrichtungen umschaltbar sein.

Bei einer vorteilhaften Ausführung sind auf der Rotorachse zwei axial zueinander versetzte, relativ zueinander in entgegengesetzter Drehrichtung (z. B. mittels zweier koaxial zueinander angeordneter Antriebswellen) antreibbare Rotorköpfe angeordnet, so dass für die Kavitationswirkung vorteilhaft eine hohe Strömungsgeschwindigkeit der Flüssigkeit erzeugt wird.

Zum Bearbeiten mehrerer seitlich voneinander beabstandeter Zylinderlaufflächen 31 können mehrere Bearbeitungseinheiten 10 des vorstehend beschriebenen Aufbaus vorhanden sein, die bei entsprechender Ausbildung einer (nicht gezeigten) Steuereinrichtung auch unabhängig voneinander betreibbar ausgeführt sein können. Alternativ oder zusätzlich ist auch eine Verstellbarkeit der Bearbeitungseinheit 10 und/oder der Aufnahmevorrichtung 2 in einer zur Rotationsachse orthogonalen Ebene (x-y-Ebene), und zwar in mindestens einer der beiden Ebenenrichtungen H möglich.

Zur Bearbeitung der Zylinderlaufflächen 31 wird der Kavitationsrotor 12 nach entsprechender Ausrichtung der Rotationsachse bezüglich der Zylinderbohrung in x-y-Richtung mittels des Stellkörpers 14 koaxial zur Achse der betreffenden Zylinderbohrung 30 in axialer Richtung V verfahren, bis er in die Zylinderbohrung eintaucht. Die Rotationsgeschwindigkeit des Kavitationsrotors 12 wird so gewählt, dass sich an der Zylinderlauffläche 31 ein für die gewünschte Aufrauhung entsprechender Materialabtrag in Folge einer Kavitationswirkung (Bildung von Dampfblasen durch Druckschwankungen der Flüssigkeit und schlagartiges Zusammenfallen der Dampfblasen) ergibt. Dabei ist die Umlaufgeschwindigkeit des Kavitationsrotors so gewählt, dass die Kavitationswirkung entsteht und auf die Materialeigenschaften der Zylinderlaufflächen 31, wie z. B. Aluminium, abgestimmt ist. Zum Erzeugen der Kavitationswirkung weist der Kavitationsrotor 12 eine geeignete Umfangskontur auf, wie eingangs beschrieben. Fig. 2 zeigt beispielsweise eine Umfangskontur mit vier sich in radialer Richtung stetig vergrößernden und vier sich daran anschließenden verkleinernden Abschnitten in einer Ebene orthogonal zur Rotationsachse. Auf diese Weise ergeben sich in der zur Rotationsachse senkrechten Ebene bezüglich der umgebenden Zylinderlauffläche an festen Orten unterschiedliche Abstände und Druckschwankungen während der Rotation, wodurch die beschriebene Kavitationswirkung und Materialabtragung an der Zylinderlauffläche entsteht. Auch andere Umfangskonturen mit mehr oder weniger sich vergrößernden und verkleinernden Abschnitten, in wendelförmiger bzw. schraubenförmiger Ausbildung oder propellerartiger beziehungsweise schaufelradartiger Ausführung mit unterschiedlich geformten Schaufeln sind verwendbar.

## Patentansprüche

1. Vorrichtung zum Aufrauen von Zylinderbohrungen (30) umgebenden Zylinderlaufflächen (31) unter Einwirkung von Flüssigkeit mit einer eine rotierende Einheit (5) aufweisenden Bearbeitungseinheit (10),
**dadurch gekennzeichnet,**
**dass** ein Aufnahmebehälter (21) für die Flüssigkeit zum Bilden eines Flüssigkeitsbads vorhanden ist, in dem während der Bearbeitung ein die Zylinderbohrungen (30) aufweisendes Gehäuse (32) positioniert ist, und dass die rotierende Einheit (5) an eine Antriebseinheit (6) gekoppelt und mit einem Kavitationsrotor (12) versehen ist, welcher beim Betrieb im Flüssigkeitsbad in die Nähe einer Zylinderlauffläche (31) gebracht ist und mit einer durch die Rotation an der Zylinderlauffläche eine Kavitationswirkung verursachenden Außenkontur versehen ist.

2. Vorrichtung nach Anspruch 1,
**dadurch gekennzeichnet,**
**dass** die Außenkontur des Kavitationsrotors (12) mindestens einen in axialer Draufsicht in Umlaufrichtung gekrümmten Abschnitt aufweist.

3. Vorrichtung nach Anspruch 1 oder 2,
**dadurch gekennzeichnet,**
**dass** die Außenkontur des Kavitationsrotors (12) wendellinienförmig verläuft.

4. Vorrichtung nach Anspruch 1 oder 2,
**dadurch gekennzeichnet,**
**dass** der Kavitationsrotor (12) schaufelradartig mit mindestens einem Flügelelement ausgebildet ist.

5. Vorrichtung nach Anspruch 1 oder 2
**dadurch gekennzeichnet,**
**dass** der Kavitationsrotor (12) walzenförmig ausgebildet ist.

6. Vorrichtung nach einem der vorhergehenden Ansprüche,
**dadurch gekennzeichnet,**
**dass** die Antriebseinheit (6) über eine in axialer Richtung (V) verstellbare Koppelmechanik (7) mit dem Kavitationsrotor (21) verbunden ist oder dass der Aufnahmebehälter (21) zusammen mit dem Gehäuse (32) in axialer Richtung (V) verstellbar ist.

7. Vorrichtung nach einem der vorhergehenden Ansprüche,
**dadurch gekennzeichnet**,
das die Antriebseinheit (6) mit einer Drehzahlsteuerung oder Drehzahlregelung versehen ist.

8. Vorrichtung nach einem der vorhergehenden Ansprüche,
**dadurch gekennzeichnet,**
**dass** die Bearbeitungseinheit (10) und/oder der Aufnahmebehälter (21) mit dem die Zylinderbohrungen (30) aufweisenden Gehäuse (32) in zumindest einer zur axialen Richtung (V) orthogonalen Ebenenrichtung (H) verstellbar ist/sind.

9. Vorrichtung nach einem der vorhergehenden Ansprüche,
**dadurch gekennzeichnet,**
**dass** der Außendurchmesser des Kavitationsrotors (12) verstellbar ist.

10. Vorrichtung nach einem der vorhergehenden Ansprüche,
**dadurch gekennzeichnet,**
**dass** in dem Aufnahmebehälter (21) eine Plattform (20) zum Halten des die Zylinderbohrungen (30) aufweisenden Gehäuses (32) angeordnet ist.

11. Vorrichtung nach einem der vorhergehenden Ansprüche,
**dadurch gekennzeichnet,**
**dass** der Kavitationsrotor (21) zwei axial versetzte Rotorköpfe aufweist, die relativ zueinander in entgegengesetzten Richtungen antreibbar sind.

12. Verfahren zum Bearbeiten von Zylinderbohrungen (30) umgebenden Zylinderlaufflächen (31) durch Aufrauen,
**dadurch gekennzeichnet,**
**dass** die Zylinderlauffläche (31) in einem Wasserbad angeordnet und die Aufrauung in dem Wasserbad durch Abtragung mittels Kavitationswirkung erzeugt wird und
**dass** die Kavitationswirkung mittels eines relativ zu der Zylinderlauffläche rotierenden Kavitationsrotors (12) erzeugt wird.

13. Verfahren nach Anspruch 12,
**dadurch gekennzeichnet,**
**dass** der Kavitationsrotor (12) während der Bearbeitung relativ zu der Zylinderlauffläche in axialer Richtung bewegt wird.

## Claims

1. Device for roughening cylinder faces (31) surrounding cylinder bores (30) under the action of liquid by means of a machining unit (10) having a rotating unit (5), **characterized in that** a receptacle (21) for the liquid is provided to form a liquid bath, in which a housing (32) having the cylinder bores (30) is positioned during machining, and **in that** the rotating unit (5) is coupled to a drive unit (6) and is provided with a cavitation rotor (12) which, during operation in the liquid bath, is brought close to a cylinder face (31), and is provided with an outer contour which causes a cavitation effect due to the rotation on the cylinder face.

2. Device according to claim 1, **characterized in that** the outer contour of the cavitation rotor (12) has at least one portion which is curved in the direction of rotation in an axial plan view.

3. Device according to either claim 1 or claim 2, **characterized in that** the outer contour of the cavitation rotor (12) is helical.

4. Device according to either claim 1 or claim 2, **characterized in that** the cavitation rotor (12) is designed in the manner of a paddle wheel having at least one blade element.

5. Device according to either claim 1 or claim 2, **characterized in that** the cavitation rotor (12) is roller shaped.

6. Device according to any of the preceding claims, **characterized in that** the drive unit (6) is connected to the cavitation rotor (21) via a coupling mechanism (7) which is adjustable in the axial direction (V), or **in that** the receptacle (21), together with the housing (32), is adjustable in the axial direction (V).

7. Device according to any of the preceding claims, **characterized in that** the drive unit (6) is provided with an open-loop or closed-loop speed control system.

8. Device according to any of the preceding claims, **characterized in that** the machining unit (10) and/or the receptacle (21), together with the housing (32) having the cylinder bores (30), is/are adjustable in at least one plane direction (H) which is orthogonal to the axial direction (V).

9. Device according to any of the preceding claims, **characterized in that** the outer diameter of the cavitation rotor (12) is adjustable.

10. Device according to any of the preceding claims, **characterized in that** a platform (20) for holding the housing (32) having the cylinder bores (30) is arranged in the receptacle (21).

11. Device according to any of the preceding claims, **characterized in that** the cavitation rotor (21) has two axially offset rotor heads which can be driven in opposite directions relative to one another.

12. Method for machining cylinder faces (31) surrounding cylinder bores (30) by roughening, **characterized in that** the cylinder face (31) is arranged in a water bath and the roughening is generated in the water bath by removal by means of a cavitation effect, and **in that** the cavitation effect is generated by means of a cavitation rotor (12) rotating relative to the cylinder face.

13. Method according to claim 12, **characterized in that** the cavitation rotor (12) is moved in the axial direction relative to the cylinder face during machining.

## Revendications

1. Dispositif destiné à grainer des glaces de cylindre (31) qui entourent des alésages de cylindre (30) sous l'action d'un liquide avec une unité d'usinage (10) pourvue d'une unité rotative (5), **caractérisé en ce qu'**un récipient d'accueil (21) pour le liquide est présent pour la formation d'un bain de liquide dans lequel, pendant l'usinage, est positionné un carter (32) comportant les alésages de cylindre (30), et **en ce que** l'unité rotative (5) est accouplée à une unité d'entraînement (6) et pourvue d'un rotor à cavitation (12) qui est amené à proximité d'une glace de cylindre (31) lors du fonctionnement dans le bain de liquide et qui est pourvu d'un contour externe provoquant un effet de cavitation par la rotation contre la glace de cylindre.

2. Dispositif selon la revendication 1, **caractérisé en ce que** le contour externe du rotor à cavitation (12) présente au moins une section incurvée dans le sens de rotation en vue de dessus axiale.

3. Dispositif selon la revendication 1 ou 2, **caractérisé en ce que** le contour externe du rotor à cavitation (12) s'étend en forme de ligne en spirale.

4. Dispositif selon la revendication 1 ou 2, **caractérisé en ce que** le rotor à cavitation (12) est réalisé à la manière d'une roue à aubes pourvue d'au moins un élément d'aile.

5. Dispositif selon la revendication 1 ou 2, **caractérisé en ce que** le rotor à cavitation (12) est réalisé sous la forme d'un rouleau.

6. Dispositif selon l'une des revendications précédentes, **caractérisé en ce que** l'unité d'entraînement (6) est reliée au rotor à cavitation (21) par l'intermédiaire d'un mécanisme d'accouplement (7) réglable dans la direction axiale (V) ou **en ce que** le récipient d'accueil (21) pourvu du carter (32) est réglable dans la direction axiale (V).

7. Dispositif selon l'une des revendications précédentes, **caractérisé en ce que** l'unité d'entraînement (6) est pourvue d'une commande de vitesse de rotation ou d'une régulation de vitesse de rotation.

8. Dispositif selon l'une des revendications précédentes, **caractérisé en ce que** l'unité d'usinage (10) et/ou le récipient d'accueil (21) pourvu du carter (32) comportant les alésages de cylindre (30) est/sont réglable(s) dans au moins une direction plane (H) orthogonale à la direction axiale (V).

9. Dispositif selon l'une des revendications précédentes, **caractérisé en ce que** le diamètre externe du rotor à cavitation (12) est réglable.

10. Dispositif selon l'une des revendications précédentes, **caractérisé en ce qu'**une plate-forme (20) de maintien du carter (32) comportant les alésages de cylindre (30) est disposée dans le récipient d'accueil (21).

11. Dispositif selon l'une des revendications précédentes, **caractérisé en ce que** le rotor à cavitation (21) comporte deux têtes de rotor axialement décalées qui peuvent être entraînées dans des directions opposées.

12. Procédé d'usinage de glaces de cylindre (31) qui entourent des alésages de cylindre (30) par grainage, **caractérisé en ce que** la glace de cylindre (31) est disposée dans un bain d'eau et le grainage dans le bain d'eau est produit par enlèvement au moyen d'un effet de cavitation et **en ce que** l'effet de cavitation est produit au moyen d'un rotor à cavitation (12) tournant par rapport à la glace de cylindre.

13. Procédé selon la revendication 12, **caractérisé en ce que** le rotor à cavitation (12) est déplacé dans la direction axiale par rapport à la glace de cylindre pendant l'usinage.
